# EUROPEAN PATENT APPLICATION

(11) **EP 4 629 003 A1**
(43) Date of publication of application: **08.10.2025**
(21) Application number: 25162379.9
(22) Date of filing: 07.03.2025
(51) Int. Cl.: G05B 19/409, B30B 15/26

(54) **PRESS MACHINE AND PRESS MACHINE OPERATION SUPPORT METHOD**

(30) Priority: 08.03.2024 JP 2024035887
(71) Applicant: Aida Engineering Ltd., Sagamihara-shi Kanagawa 252-5181 (JP)
(72) Inventor: HARADA, Yasuhiro, Sagamihara-shi, 252-5181 (JP)
(74) Representative: MERH-IP Matias Erny Reichl Hoffmann Patentanwälte PartG mbB

(57) **Abstract**

A press machine includes: an operation content recording unit that records history data including operation content and an operation time of an operation performed on the press machine; a database generation unit that extracts, from the recorded history data, data corresponding to a series of operations including an operation to serve as a start point and an operation to serve as an end point of an operation procedure to be an operation support target, and generates a database of the operation procedure; an operation procedure acquisition unit that acquires, from the database, the operation procedure that satisfies a determination criterion designated by a user; and an operation procedure output unit that outputs the acquired operation procedure.

## Description

### BACKGROUND OF THE INVENTION

The present invention relates to a press machine and a press machine operation support method.

Techniques for supporting a user's operation and determination, such as driving assistance techniques for automobiles, have been spreading. Further, in pressing work, technique succession (work know-how succession) of experienced workers is an issue. In the case of an operation of a press machine, procedures may be different depending on a scale of a system and a type of die, and the user searches for an efficient operation procedure. Alternatively, a predetermined automatic operation procedure may not be improved.

As a press machine operation support method, JP H5-53798 U discloses a method of outputting individual operation information according to a predetermined order set in advance and guiding an operation procedure. Further, JP 2014-67182 A discloses, as a method of presenting an operation procedure, a method of learning an operation procedure and updating the operation procedure according to an operation time.

In the invention described in JP H5-53798 U, since the operation procedure is indicated by one pattern determined by an operator, it remains unclear whether the operation procedure is the most efficient operation procedure. Further, the invention described in JP 2014-67182 A gives importance to only the operation time, and thus has a possibility of missing an operation procedure or adopting an irregular operation procedure.

### SUMMARY OF THE INVENTION

An object of the present invention is to provide a press machine and a press machine operation support method capable of presenting an operation procedure that meets a condition desired by a user.

A press machine according to the first aspect of the present invention includes:
an operation content recording unit that records history data including operation content and an operation time of an operation performed on the press machine;
a database generation unit that extracts, from the recorded history data, data corresponding to a series of operations including an operation to serve as a start point and an operation to serve as an end point of an operation procedure to be an operation support target, and generates a database of the operation procedure;
an operation procedure acquisition unit that acquires, from the database, the operation procedure that satisfies a determination criterion designated by a user; and
an operation procedure output unit that outputs the acquired operation procedure.

A press machine operation support method according to the second aspect of the present invention includes:
an operation content recording step of recording history data including operation content and an operation time of an operation performed on the press machine;
a database generation step of extracting, from the recorded history data, data corresponding to a series of operations including an operation to serve as a start point and an operation to serve as an end point of an operation procedure to be an operation support target, and generating a database of the operation procedure;
an operation procedure acquisition step of acquiring, from the database, the operation procedure that satisfies a determination criterion designated by a user; and
an operation procedure output step of outputting the acquired operation procedure.

### BRIEF DESCRIPTION OF THE DRAWINGS

FIG. 1 is a diagram illustrating an example of a configuration of a press machine according to an embodiment of the present invention.
FIG. 2 is a flowchart illustrating a flow of processing by a processing unit.
FIG. 3 illustrates examples of IDs set in operation content.
FIG. 4 illustrates examples of history data.
FIG. 5 illustrates examples of the history data.
FIG. 6 illustrates examples of data of operation procedures stored in a database.
FIG. 7 illustrates examples of operation procedures to be displayed.
FIG. 8 illustrates selection of an operation procedure.
FIG. 9 illustrates selection of an operation procedure.
FIG. 10 illustrates selection of an operation procedure.

### DETAILED DESCRIPTION OF THE INVENTION

(1) A press machine according to an embodiment of the present invention includes:
   an operation content recording unit that records history data including operation content and an operation time of an operation performed on the press machine;
   a database generation unit that extracts, from the recorded history data, data corresponding to a series of operations including an operation to serve as a start point and an operation to serve as an end point of an operation procedure to be an operation support target, and generates a database of the operation procedure;
   an operation procedure acquisition unit that acquires, from the database, the operation procedure that satisfies a determination criterion designated by a user; and
   an operation procedure output unit that outputs the acquired operation procedure.

A press machine operation support method according to an embodiment of the present invention includes:
an operation content recording step of recording history data including operation content and an operation time of an operation performed on the press machine;
a database generation step of extracting, from the recorded history data, data corresponding to a series of operations including an operation to serve as a start point and an operation to serve as an end point of an operation procedure to be an operation support target, and generating a database of the operation procedure;
an operation procedure acquisition step of acquiring, from the database, the operation procedure that satisfies a determination criterion designated by a user; and
an operation procedure output step of outputting the acquired operation procedure.

According to the above embodiments, it is possible to present the operation procedure that meets a condition desired by the user and to perform appropriate operation support by acquiring and outputting the operation procedure that satisfies the determination criterion designated by the user from the database of the operation procedure.

(2) In the press machine and the press machine operation support method according to the above embodiments,
the determination criterion designatable by the user may be any one of a time required for operation, an order of operation, a frequency of operation, stability after completion of operation, simplicity of operation, and a period of operation.

(3) In the press machine according to the above embodiment,
the database generation unit may extract, from the recorded history data, data corresponding to a series of operations including the operation to serve as a start point, an operation to serve as a pass point, and the operation to serve as an end point of the operation procedure to be an operation support target.

In the press machine operation support method according to the above embodiment,
in the database generation step,
data corresponding to a series of operations including the operation to serve as a start point, an operation to serve as a pass point, and the operation to serve as an end point of the operation procedure to be an operation support target may be extracted from the recorded history data.

(4) In the press machine according to the above embodiment,
the operation procedure acquisition unit may acquire the operation procedure from the database based on a plurality of determination criteria with priority designated by a user.

In the press machine operation support method according to the above embodiment,
in the operation procedure acquisition step,
the operation procedure may be acquired from the database based on a plurality of determination criteria with priority designated by a user.

Hereinafter, some embodiments of the present invention will be described in detail with reference to the drawings.

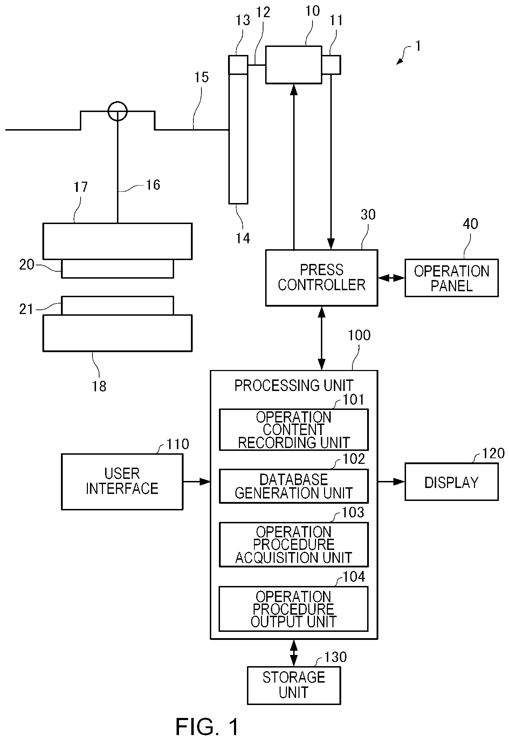

FIG. 1 is a diagram illustrating an example of a configuration of a press machine (servo press machine) according to an embodiment of the present invention. A press machine 1 converts rotation of a servomotor 10 into a vertical reciprocating motion (linear reciprocating motion or elevating and lowering motion) of a slide 17 by an eccentric mechanism that converts a rotational motion into a linear motion, and performs press processing for a material to be processed using the vertical reciprocating motion of the slide 17. The press machine 1 includes the servomotor 10, an encoder 11, a drive shaft 12, a drive gear 13, a main gear 14, a crankshaft 15, a connecting rod 16, the slide 17, a bolster 18, a press controller 30, an operation panel 40, and a processing unit 100 constituting an operation support device, a user interface 110, a display 120, and a storage unit 130. The press machine is not limited to a servo press machine, and may be, for example, a mechanical press using a flywheel or a linear motion type press using a ball screw. In this case, the encoder may be provided at an axial end of the crankshaft 15 or an axial end of the ball screw.

The drive shaft 12 is connected to a rotating shaft of the servomotor 10, and the drive gear 13 is connected to the drive shaft 12. The main gear 14 is meshed with the drive gear 13, the crankshaft 15 is connected to the main gear 14, and the connecting rod 16 is connected to the crankshaft 15. The rotating shafts such as the drive shaft 12 and the crankshaft 15 are supported by bearings (not illustrated) appropriately provided. The eccentric mechanism is formed by the crankshaft 15 and the connecting rod 16. This eccentric mechanism allows the slide 17 connected to the connecting rod 16 to move upwards and downwards relative to the stationary bolster 18. One or a plurality of upper dies 20 is attached to the slide 17, and one or a plurality of lower dies 21 is attached to the bolster 18.

The press controller 30 (control device) controls an operation of the press machine 1 based on operation information from the operation panel 40. Further, the press controller 30 controls the elevating and lowering motion of the slide 17 based on a predetermined slide motion stored in the storage unit. As an example, the press controller 30 includes a control device such as a PLC, a servo controller, and a servo amplifier. More specifically, the press controller 30 calculates a motor rotational position command value from a command of position and speed of the slide 17 defined by the slide motion, and controls rotational position, rotational speed, and current of the servomotor 10 based on a rotational position command. The rotational position of the servomotor 10 is detected by the encoder 11 attached to the servomotor 10.

The operation panel 40 is for performing various settings and operations of the press machine 1, and includes input/output devices such as a touch panel, a switch with a lamp, and a button. The operation information input on the operation panel 40 is output to the press controller 30.

The user interface 110 (operation unit) is used for a user to input the operation information, and outputs the input operation information to the processing unit 100. Functions of the user interface 110 can be realized by hardware such as a keyboard, a mouse, a button, and a touch panel.

The display 120 (display unit) displays an image generated by the processing unit 100, and the function thereof can be realized by an LCD, a touch panel that also functions as the user interface 110, or the like.

The storage unit 130 stores programs and various data for causing a computer to function as each unit of the processing unit 100, and functions as a work area of the processing unit 100, and the function thereof can be realized by a hard disk, a RAM, or the like.

The processing unit 100 includes an operation content recording unit 101, a database generation unit 102, an operation procedure acquisition unit 103, and an operation procedure output unit 104. Functions of the processing unit 100 can be realized by various processors (CPU and the like) and programs.

The operation content recording unit 101 records history data including operation content (input information) and an operation time of an operation performed on the operation panel 40 of the press machine 1. The recorded history data is stored in the storage unit 130.

The database generation unit 102 extracts, from the history data stored in the storage unit 130, data corresponding to a series of operations including an operation to serve as a start point and an operation to serve as an end point of an operation procedure to be an operation support target, and generates a database of the operation procedure. The generated database is stored in the storage unit 130. Further, the database generation unit 102 may extract, from the history data, data corresponding to a series of operations including the operation to serve as a start point, an operation to serve as a pass point, and the operation to serve as an end point of the operation procedure to be an operation support target. The user inputs information for defining each operation to serve as the start point, the pass point, or the end point of an operation procedure to the user interface 110 (alternatively, the operation panel 40) in advance.

The operation procedure acquisition unit 103 acquires the operation procedure that satisfies a determination criterion (any one of a time required for operation, an order of operation, a frequency of operation, stability after completion of operation, simplicity of operation, or a period of operation) designated by the user from the database stored in the storage unit 130. The operation procedure output unit 104 outputs information for guiding the operation procedure acquired by the operation procedure acquisition unit 103 to the display 120 or the operation panel 40.

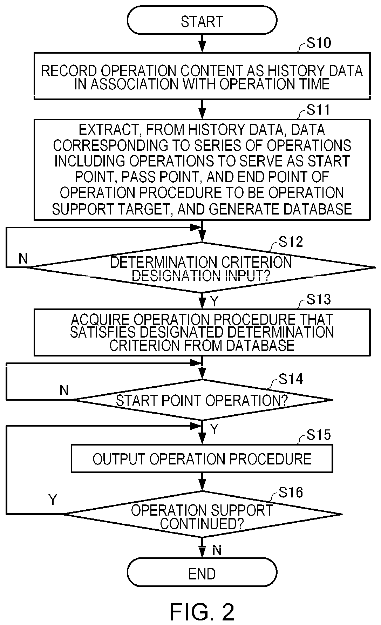

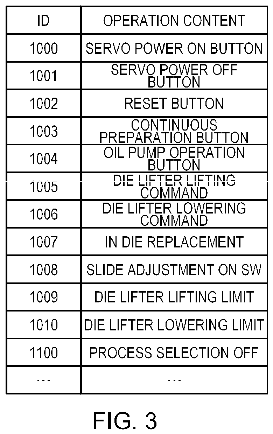

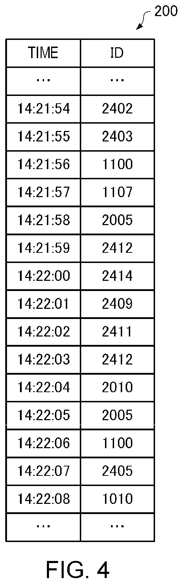

FIG. 2 is a flowchart illustrating a flow of processing by the processing unit 100. Steps S10 and S11 in FIG. 2 are processing for generating the database of the operation procedure. After the start of pressing work, the input information (operation content) of the operation performed on the operation panel 40 is primarily stored by the press controller 30, and the operation content recording unit 101 sequentially receives the operation content from the press controller 30 and records the received operation content in time series in association with time information (operation time) to generate the history data (step S10). As illustrated in FIG. 3, an ID is set to each operation content. As illustrated in FIG. 4, in history data 200, the ID corresponding to the operation content is stored in association with a time (year, month, day, minute, and second) at which the operation was performed.

Next, the database generation unit 102 extracts, from the history data 200, the data corresponding to a series of operations including the operation to serve as the start point, the operation to serve as the pass point, and the operation to serve as the end point of the operation procedure to be an operation support target, and generates the database (step S11).

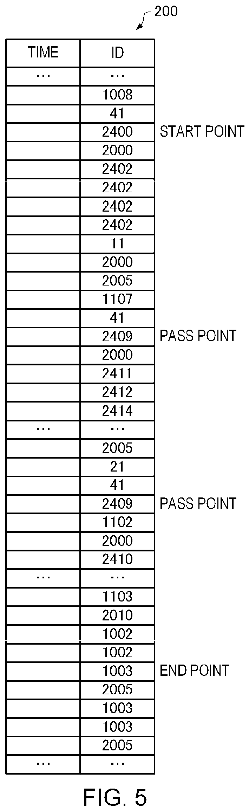

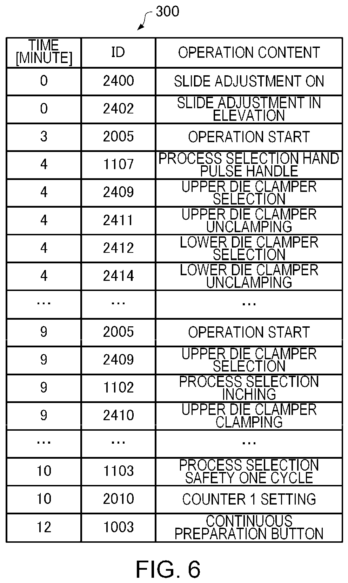

FIGS. 5 and 6 illustrate an extraction example in a case where the operation procedure to be the operation support target is a "die replacement operation". In this example, the operation to serve as the start point of the operation procedure is defined as "slide adjustment on (ID: 2400)", the operation to serve as the pass point is defined as "upper die clamper selection (ID: 2409)", and the operation to serve as the end point is defined as "continuous preparation button (ID: 1003)". In this case, the data corresponding to a series of operations from the operation (ID: 2400) to serve as the start point to the operation (ID: 1003) to serve as the end point through the operation (ID: 2409) to serve as the pass point is extracted from the history data 200 illustrated in FIG. 5, and data 300 of the operation procedure as illustrated in FIG. 6 is generated. Note that data corresponding to a continuously duplicate operation (ID: 2402) and data corresponding to operations (IDs: 11, 21, 41, 1002, and 2000) designated in advance as operations to be excluded are not extracted. In addition, to determine a determination criterion (the stability after completion of the operation) to be described below, information regarding the stability after completion of the operation (for example, the number of times of operation stoppage within a certain period after the operation to serve as the end point or the number of times of operation within the certain period) is added to the extracted data 300. In addition, in the data 300 of the operation procedure illustrated in FIG. 6, an elapsed time (unit: minute) from when the operation to serve as the start point is performed as the time at which the operation was performed. In this manner, a plurality of pieces of the data 300 each corresponding to a series of operations including the start point and the end point of the operation procedure to be the operation support target is extracted from the history data 200, and the database of the operation procedures is generated.

Steps S12 to S16 in FIG. 2 are processing for performing operation support. The operation procedure acquisition unit 103 determines whether an input for designating the determination criterion has been made to the user interface 110 (step S12), and in a case where the input has been made (Y in step S12), the operation procedure acquisition unit 103 acquires (selects) the operation procedure that satisfies the determination criterion designated in the input from the database of operation procedures (step S13). The user can designate, as the determination criterion, any one of (1) the time required for operation, (2) the order of operation, (3) the frequency of operation, (4) the stability after completion of operation, (5) the simplicity of operation, or (6) the period of operation.

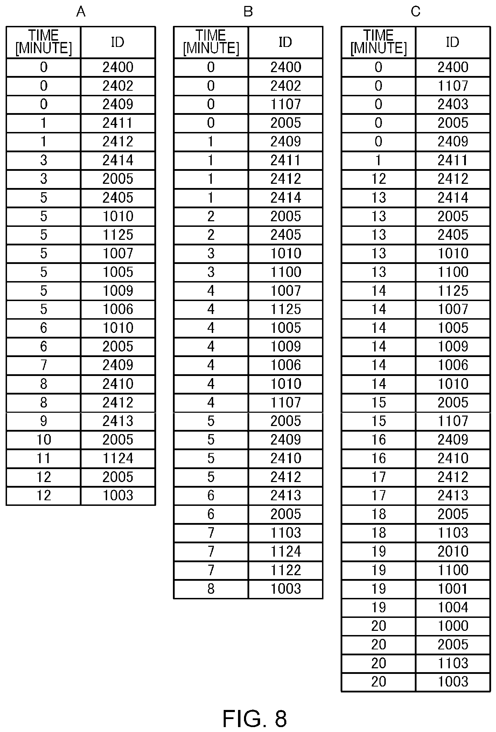

In a case where (1) the time required for operation is designated as the determination criterion, the operation procedure acquisition unit 103 selects the operation procedure having a shortest time from the start of operation to the completion of operation from the database of the operation procedures as the operation procedure that satisfies the determination criterion. For example, in a case of selecting from operation procedures "A" to "C" illustrated in FIG. 8 stored in the database, the operation procedure "B" having the shortest time from the operation (ID: 2400) to serve as the start point to the operation (ID: 1003) to serve as the end point is selected.

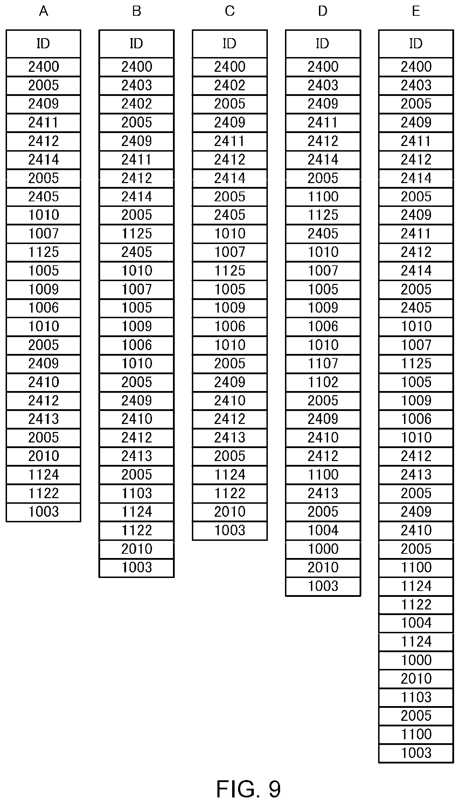

Further, in a case where (2) the order of the operation is designated as the determination criterion, the operation procedure acquisition unit 103 selects the operation procedure having a highest ratio of the order of the operation (highest matching rate with another operation procedure) (that is, the most frequently operated procedure) from the database of the operation procedures as the operation procedure that satisfies the determination criterion. For example, in a case of selecting from operation procedures "A" to "E" illustrated in FIG. 9 stored in the database, the matching rate of "A" and "B", the matching rate of "A" and "C", the matching rate of "A" and "D", and the matching rate of "A" and "E" are obtained, and the matching rates are summed to obtain a total value of the matching rates for "A". Similarly, the total value of the matching rates is obtained for each of the operation procedures "B" to "E". Then, the operation procedure having the largest total value of the matching rates is selected from "A" to "E". Note that "A" and "B" have similar flows and the matching rate is high (80%), and "A" and "E" have different procedures and thus the matching rate is low (50%).

Further, in a case where (3) the frequency of the operation is designated as the determination criterion, the operation procedure acquisition unit 103 selects, from the database of operation procedures, the operation procedure having a lowest frequency of operation from the start of operation to the completion of operation (a procedure with a least irregular operation in the procedure) as the operation procedure that satisfies the determination criterion. For example, in a case of selecting from the operation procedures "A" to "C" illustrated in FIG. 8 stored in the database, the operation procedure "A" having the lowest frequency of operation is selected. Note that, among the operation procedures illustrated in FIG. 8, the operation procedure having the highest frequency of operation is "C".

Further, in a case where (4) the stability after completion of operation is designated as the determination criterion, the operation procedure acquisition unit 103 selects, from the database of operation procedures, the operation procedure having highest stability after completion of an operation to serve as the end point (for example, the frequency of stopping the operation after restarting the operation to serve as the end point is performed is the lowest, or the number of operations recorded in a certain period after the operation to serve as the end point is performed is the smallest) as the operation procedure that satisfies the determination criterion.

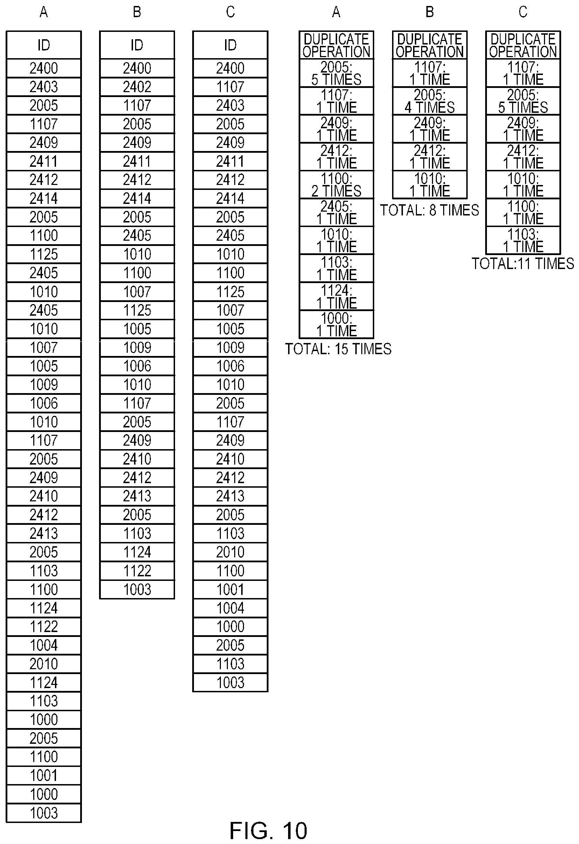

In addition, in a case where (5) the simplicity of operation is designated as the determination criterion, the operation procedure acquisition unit 103 selects the operation procedure having a least number of duplicate operations from the database of operation procedures as the operation procedure that satisfies the determination criterion. For example, in the case of selecting from among the operation procedures "A" to "C" illustrated in FIG. 10 stored in the database, a total value of the number of times of duplicate operations for each ID is obtained for each of "A" to "C", and the operation procedure "B" having the smallest total value of the number of times of duplicate operations is selected.

Further, in a case where (6) the period of operation is designated as the determination criterion, the operation procedure acquisition unit 103 selects, from the database, the operation procedure including a series of operations recorded in a designated period (for example, from March to September 2023, or the like) as the operation procedure that satisfies the determination criterion.

The operation procedure acquisition unit 103 may acquire the operation procedure that satisfies the determination criterion designated from the database by using a learning model machine-learned so as to select the operation procedure that satisfies the determination criterion from the database when the determination criterion is input, and inputting the determination criterion designated by the user to the learning model. As an algorithm of the machine learning, an AI technology such as a neural network, deep learning, a large-scale language model (LLM), or random forest can be used.

Further, the user may designate a plurality of determination criteria with priority (for example, (3) the frequency of operation is designated as the first priority determination criterion, (1) the time required for operation is designated as the second priority determination criterion, and (2) the order of operation is designated as the third priority determination criterion). In this case, the operation procedure acquisition unit 103 acquires the operation procedure from the database based on the plurality of determination criteria with priority designated by the user. For example, for each of the plurality of designated determination criteria, a predetermined number of operation procedures that satisfies the determination criterion may be selected, a score that becomes higher as the priority of the determination criterion is higher and as the order is higher (the degree of satisfying the determination criterion is higher) may be given to each of the predetermined number of selected operation procedures, and the operation procedure having a highest total value of the scores may be finally selected (acquired). For example, in a case where "B" is selected as the first order (score: 100) operation procedure, "A" is selected as the second order (score: 80) operation procedure, and "C" is selected as the third order (score: 60) operation procedure, which satisfy the designated first priority determination criterion, and "A" is selected as the first order (score: 50) operation procedure, "D" is selected as the second order (score: 40) operation procedure, and "C" is selected as the third order (score: 30) operation procedure, which satisfy the designated second priority determination criterion, the score of the operation procedure "A" is "130 (80 + 50)", the score of the operation procedure "B" is "100", the score of the operation procedure "C" is "90 (60 + 30)", and the score of the operation procedure "D" is "40". Therefore, the operation procedure "A" having the highest score is finally selected.

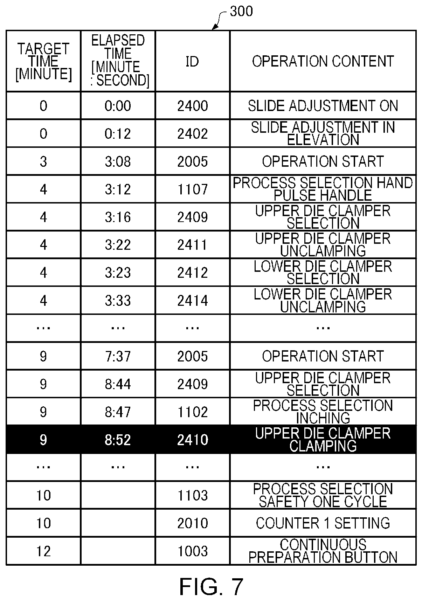

Returning to the description of FIG. 2, the operation procedure output unit 104 monitors the operation of the operation panel 40 and determines whether or not the operation to serve as the start point in the operation procedure acquired (selected) by the operation procedure acquisition unit 103 has been performed (step S14). In a case where it is detected that the operation to serve as the start point has been performed (Y in step S14), the operation support is started, and the acquired operation procedure is output (step S15). The operation procedure output unit 104 may display an image representing the operation panel 40 on the display 120 and perform display for guiding the operation procedure (display indicating operation to be performed next) in the image, or may perform display and lighting for guiding the operation procedure, using a touch panel or a switch with a lamp of the operation panel 40. A time interval at which the operation procedure is displayed is based on the time (operation time) included in the data 300 of the operation procedure. For example, in a case where the operation procedure illustrated in FIG. 6 is acquired, the operation support is started when the operation with the ID "2400" as the start point is detected, and display for guiding the operation with the ID "2402" is performed. At this time, for example, as illustrated in FIG. 7, a target time and a duration until the ID "2005: operation start" that is the next operation are displayed on the display 120. Then, display is performed so as to guide the operation while counting up the elapsed time to 0:00, 0:01, ... and when the operation is completed, counting-up of the next operation starts. In this manner, a method of indicating the next operation procedure according to the elapsed time of each operation content is conceivable. In addition, for example, as illustrated in FIG. 7, a method of performing the operation support that facilitates visual recognition for the operator by inversely displaying a row with the ID "2410" as the current operation target is also conceivable.

Next, the operation procedure output unit 104 determines whether or not to terminate the operation support (step S16), and proceeds to step S15 in a case where the operation support is continued (Y in step S16). In a case where the operation procedure has reached the operation to serve as the end point, or in a case where a predetermined operation for canceling the operation support has been performed by the user (N in step S16), the operation support is terminated.

According to the embodiments of the present invention, it is possible to present the operation procedure that meets a condition desired by the user and to perform appropriate operation support by acquiring and outputting the operation procedure that satisfies the determination criterion designated by the user from the database of the past operation procedure. Further, it is possible to prevent disturbance from entering the operation procedure stored in the database by defining the start point, the pass point, and the end point of the operation procedure to be the operation support target and extracting corresponding data.

Although the embodiments of the present invention have been described in detail above, those skilled in the art will readily appreciate that various modifications can be made without materially departing from the novel teachings and effects of the present invention.

## Claims

1. A press machine comprising:
an operation content recording unit that records history data including operation content and an operation time of an operation performed on the press machine;
a database generation unit that extracts, from the recorded history data, data corresponding to a series of operations including an operation to serve as a start point and an operation to serve as an end point of an operation procedure to be an operation support target, and generates a database of the operation procedure;
an operation procedure acquisition unit that acquires, from the database, the operation procedure that satisfies a determination criterion designated by a user; and
an operation procedure output unit that outputs the acquired operation procedure.

2. The press machine according to claim 1, wherein
the determination criterion designatable by the user is any one of a time required for operation, an order of operation, a frequency of operation, stability after completion of operation, simplicity of operation, and a period of operation.

3. The press machine according to claim 1, wherein
the database generation unit extracts, from the recorded history data, data corresponding to a series of operations including the operation to serve as a start point, an operation to serve as a pass point, and the operation to serve as an end point of the operation procedure to be an operation support target.

4. The press machine according to claim 1, wherein
the operation procedure acquisition unit acquires the operation procedure from the database based on a plurality of determination criteria with priority designated by the user.

5. A press machine operation support method comprising:
an operation content recording step of recording history data including operation content and an operation time of an operation performed on the press machine;
a database generation step of extracting, from the recorded history data, data corresponding to a series of operations including an operation to serve as a start point and an operation to serve as an end point of an operation procedure to be an operation support target, and generating a database of the operation procedure;
an operation procedure acquisition step of acquiring, from the database, the operation procedure that satisfies a determination criterion designated by a user; and
an operation procedure output step of outputting the acquired operation procedure.
